(19) Europäisches Patentamt
European Patent Office
Office européen des brevets

(11) **EP 1 895 452 A1**

(12) **EUROPEAN PATENT APPLICATION**

(43) Date of publication:
**05.03.2008 Bulletin 2008/10**

(51) Int Cl.:
***G06Q 10/00*** *(2006.01)*

(21) Application number: **06017228.5**

(22) Date of filing: **18.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **ABB RESEARCH LTD.**
**8050 Zürich (CH)**

(72) Inventors:
• **Tunklev, Magnus**
**SE-72596 Västerås (SE)**
• **Lindeberg, Erik**
**SE-72346 Västerås (SE)**

• **Lehtola, Marko**
**SE-72219 Västerås (SE)**
• **Sander-Tavallaey, Shiva**
**SE-13344 Saltsjöbaden (SE)**
• **Lindkvist, Rickard**
**SE-72591 Västerås (SE)**

(74) Representative: **Kock, Ina**
**ABB AB**
**Legal Affairs and Compliance/**
**Intellectual Property**
**Forskargränd 7**
**721 78 Västerås (SE)**

(54) **Life time estimation of objects**

(57)    The invention concerns a method, device and computer program product for determining the remaining life time of an object involved in a system for process control or manufacturing as well as such a system. In the system (10) the performance of the object (24) is detected. A device (38) estimates a first type of remaining life time for the object based on previous known uses in a known historic time interval, compares (82) the detected performance with known performances, evaluates the performance of the object (24) based on a performance detected by a first performance detector (30) and a related performance detected by at least one further performance detector (34, 36), estimates a second type of remaining life time for the object based on the performance comparison, combines the first and second types of remaining life times, and determines a remaining life time based on the combination.

FIG. 1

**Description**

TECHNICAL FIELD OF THE INVENTION

The present invention relates to the estimation of the life time of objects involved in process control or manufacturing systems. The invention more particularly relates to a method, device and computer program product for determining the remaining life time of an object involved in a system for process control or manufacturing as well as such a system.

DESCRIPTION OF RELATED ART

Industrial process or manufacturing systems can be complex and include a great number of objects. Because of the fierce competition between companies using such systems it is furthermore essential to keep the system running according to plan. The stopping of a system because of faulty objects can therefore be disastrous.

It is therefore important that the life-time of the objects can be estimated such that they can as far as possible be replaced or served pre-emptively in a controlled manner, for instance in a planned service of the system, and not when a fault actually occurs.

There have evolved different wear calculations that calculate the wear of an object based on it being operated or used.

The company SKF has for instance developed a wear calculation function known as the $L_{10}$ calculation function for ball bearings. See for instance M. Bengtsson, E. Olsson, P. Funk and M. Jackson, "Technical Design of Condition Based Maintenance System", Maintenance and Reliability Conference, Proceedings of the 8th Congress, May 2004, "SKF spherical roller bearings - setting a new standard for performance and reliability", Publ No. 5100, www. SKF.com/files/001577.pdf, Dec 2004 and Loecher M and Darken C., Concurrent estimation of time-to-failure and effective wear, Proceedings of the Maintenance and Reliability Conference (MARCON) 2003, www.nps.navy.mil/cs/cjdarken/MARCON03.pdf.

There also exists a linear variable reduction method called PCA (Principal Component Analysis), which is a generic tool developed for processing statistical data. PCA is for instance described by I.T: Joliffe, Principal Component Analysis, Springer Series in Statistics, Second Edition and by S. Wold, K. Esbensen and P. Geladi in Principal Component Analysis, Chemometrics and Intelligent Laboratory Systems, Vol. 2, p. 37 - 52, 1987.

There thus exist some tools that can be used estimating the life-time of objects involved in a process control or manufacturing system. However they have as far as the present inventors know, not been put to use and combined for obtaining life-time estimations of objects.

There is therefore a need for providing an improved way of estimating the life-time of an object in an industrial system for process control or manufacturing in order to further reduce the risk of unplanned stopping of such systems for process control or manufacturing.

SUMMARY OF THE INVENTION

The present invention is therefore directed towards improving the determining of the life-time of objects in a system for process control or manufacturing.

One object of the present invention is thus to provide an improved method of determining the remaining life time of an object involved in a system for process control or manufacturing.

This object is according to a first aspect of the present invention achieved through a method of determining the remaining life time of an object involved in a system for process control or manufacturing, comprising the steps of:

detecting an object being used,
estimating a first type of remaining life time for the object based on previous known uses of the object in a known historic time interval,
detecting the performance of the object via a first performance detector, comparing the detected performance with known performances,
evaluating the performance of the object based on the performance detected by the first performance detector and a related performance detected by at least one further performance detector,
estimating a second type of remaining life time for the object based on the evaluation and performance comparison,
combining the first and second types of remaining life times, and
determining a remaining life time of the object based on the combination.

Another object of the present invention is to provide an improved device for determining the remaining life time of an object involved in a system (10) for process control or manufacturing.

This object is according to a second aspect of the present invention achieved through a device for determining the remaining life time of an object involved in a system for process control or manufacturing, comprising:

a first life time estimating unit configured to estimate a first type of remaining life time for an object based on previous known uses of the object in a known historic time interval,
a second life time estimating unit configured to
compare a detected performance of the object with known performances, evaluate the performance of the object based on a performance of the object detected by a first performance detector and a related performance detected by at least one further performance detector, and
estimate a second type of remaining life time for the object based on the performance comparison, and
a life time selecting unit configured to
combine the first and second types of remaining life times, and
determine a remaining life time of the object based on the combination.

Another object of the present invention is to provide a system for process control and manufacturing, which provides an improved determination of the remaining life time of an object involved in the system.

This object is according to a third aspect of the present invention achieved through a system for process control or manufacturing comprising at least one object being used in the system and a device according to the second aspect for determining the remaining life time of this object.

Another object of the present invention is to provide a computer program product that provides an improved determining of the remaining life time of an object involved in a system for process control or manufacturing.

This object is according to a fourth aspect of the present invention also achieved through a computer program product for determining the remaining life time of an object involved in a system for process control or manufacturing, comprising computer program code to make a computer perform when said code is loaded into said computer:

detect an object being used,
estimate a first type of remaining life time for the object based on previous known uses of the object during a known historic time interval,
detect the performance of the object via a first performance detector,
compare the detected performance with known performances,
evaluate the performance of the object based on the performance detected by the first performance detector and a related performance detected by at least one further performance detector,
estimate a second type of remaining life time for the object based on the evaluation and performance comparison,
combine the first and second types of remaining life times, and
determine a remaining life time of the object based on the combination.

The present invention has many advantages. It estimates an improved remaining life time of an object. This simplifies the decisions process for the process management to decide when to perform service in relation to the object, which may be of interest when several objects are considered. The life time determination process may therefore with advantage be used for several objects in the system and be used as input when planning maintenance of the system.

It should be emphasized that the term "comprises/comprising" when used in this specification is taken to specify the presence of stated features, integers, steps or components, but does not preclude the presence or addition of one or more other features, integers, steps, components or groups thereof.

BRIEF DESCRIPTION OF THE DRAWINGS

The present invention will now be described in more detail in relation to the enclosed drawings, in which:

fig. 1 schematically shows a simplified system where a process is controlled by a number of objects as well as sensors and a computer implementing parts of the present invention,
fig. 2 shows a block schematic a device for determining the remaining life time of an object according to the present invention,
fig. 3 shows a flow chart outlining the generals method steps for determining the remaining life time of an object according to the present invention,
fig. 4 shows a diagram showing different wear intervals used for performing a remaining wear life time estimation,
fig. 5, shows a flow chart outlining a number of method steps taken when performing a remaining wear life time estimation,

fig. 6 shows a diagram showing a plotting in time and extrapolating of a linear variable reduction function associated with abnormal behaviour in order to perform a remaining anomaly life time estimation,

fig. 7 shows a flow chart outlining a number of method steps taken when performing a remaining anomaly life time estimation, and

fig. 8 schematically shows a computer program product in the form of a CD ROM disc comprising computer program code for carrying out the invention.

DETAILED DESCRIPTION OF EMBODIMENTS

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

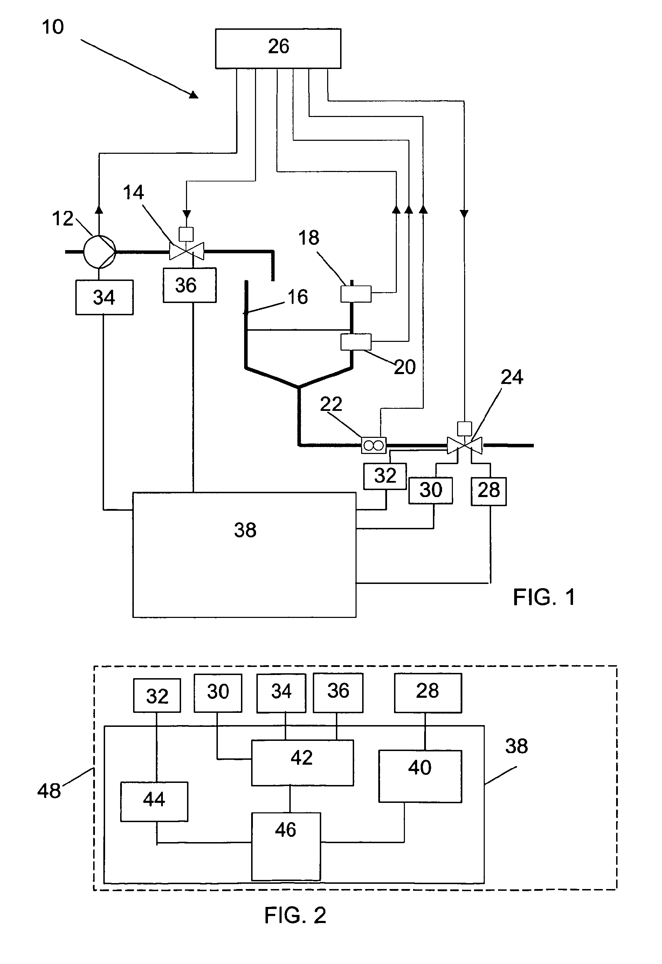

Fig. 1 schematically shows a simplified exemplifying system 10 for process control. This is just one example of a system where the invention may be implemented. It may also be implemented in a system for manufacturing of products. The system 10 may be, but is not limited to, an object based computerised system for controlling a process or perhaps part of a process. Typical processes are electrical power generation and supply process, water purification and distribution processes, oil and gas production and distribution processes, petrochemical, chemical, pharmaceutical and food production, pulp and paper production as well as metal and mineral processes. These are just some examples of environments where the system can be applied. In fig. 1 a controller 26 is shown controlling a number of physical objects involved in the process. The objects may be different entities that influence the technical process, like such things as a pump, a motor, a valve, but may also be such things as a bearing, a light bulb. etc. What is important is that the object is in some way subject to the surrounding environment and in that way its performance is degraded over time and it wears out or it may fail. The object is thus used in the system, which use may involve the object being operated either directly through receiving control commands and/or indirectly by being subject to the influence of some other object or material or product in the process.

In fig. 1 the controller 26 (Process Controller or Programmable Logic Controller PLC) controls a system including an inlet pipe leading to a tank 16 and an outlet pipe leaving the tank 16. In the inlet pipe there is provided a pump 12 that pumps fluid into the inlet pipe as well as a first valve 14. In the tank there are provided two level sensors 18 and 20 and in the outlet pipe there is provided a flow meter 22 and a second valve 24. All these elements are connected to the controller 26 for receiving control signals and send data. Said controller 26 receives control input values from the pump 12 and level sensors 18 and 20 and regulates the fluid level in the tank based on these control input values through controlling the first valve 14. It also receives control input values 22 from the flow meter and controls the second valve 24 for regulating the output fluid flow.

The operation of a physical object involved in the system, like for instance the second valve 24, makes it wear out with time and it will eventually fail. If nothing is done, the object will most likely fail at a time when production is to be up and running. This could in a worst-case scenario lead to the whole production being shut down. If this happens at the wrong time, the economical consequences could be disastrous. The object should therefore be replaced at planned maintenance times. It is at the same time important to use the object as long as it is possible. It is thus essential that the remaining life time of an object can be calculated as safely as possible to ensure that the object may be replaced in a controlled way.

The present invention is directed towards this area. The present invention will in the following be described in relation to one object, but it should be realised that it can be implemented and used, and normally is used, on several objects. As an example the second valve 24 is the object. For this reason there is a first and second detector 28 and 30 connected to the second valve 24. There is a third and fourth detector 34 and 36 connected to the pump 12 and the first valve 14, respectively. The first detector 28 is here a detector detecting that the object is being used and in this case being operated, here being opened and closed, while the second detector 30 is a detector detecting the performance of the object, where the performance is how well it operates, like for instance if it can be fully opened or closed, while the third and fourth detectors 34 and 36 detect the performance of the pump 12 and the first valve 14, which are objects related to the object of interest, i.e. the second valve 24. Related objects are objects, the actions of which have an influence on the performance of the object for which the remaining life time is to be estimated. It should here be realised that the above described related objects are mere examples of related objects in order to explain the present invention. In reality there may be other related objects as well. The number of related objects may also vary considerably. Finally there is a fifth detector or sensor 32 connected also to the second valve 24. Also this fifth detector 36 detects the performance of the object 24, which performance in this case may be that it responds to control commands, i.e. is opened or closed. All these detectors are connected to a computer 38 which comprises software implementing the function of the present invention. The second detector 30 is here also termed a first performance detector, while the third and fourth detectors 34 and 36 are further performance detectors.

Fig. 2 shows a block schematic of a device 48 for determining the remaining life time of objects according to the present invention, shown as a dashed box, which device 48 comprises the computer 38 and the above mentioned detectors 28, 30, 32, 34 and 36. In the computer 38 there is provided a first life time estimating unit 40, to which the first detector 28 is connected and that is configured to estimate a first wear based remaining life time of the object, a second life time estimating unit 42, to which the second, third and fourth detectors 30, 34 and 36 are connected and that is configured to estimate a second type of performance based life time of the object. There is also a fault determining unit 44, to which the fifth detector 32 is connected and configured to determine a state of the object based on a performance detected by the fifth detector 32. There is finally a life time selecting unit 46 connected to the first and second life time estimating units 40 and 42 and to the fault determining unit 44. As an alternative it is possible that the detectors are not a part of the device 48, but are provided as entities of the objects instead.

The general functioning of the device 46 for determining the remaining life time of the object will now be described with reference being made to fig. 1, 2 and 3, where the latter shows a flow chart outlining the general method steps for determining the remaining life time of an object according to the present invention.

As the process 10 in fig. 1 is running the different detectors 28, 30, 32, 34, 36 detect various values of the objects 12, 14, 24 and provide these to the associated units of the device 48. Thus the fifth detector 32 provides a performance detection, step 50, and provides the result to the fault determining unit 44, which determines the state of the object according to the detected performance, step 51. The state may here for instance be healthy, sick or faulty. The state is then provided to the life time selecting unit 46, which indicates the state, step 52, on a suitable display of an operator or of some other personnel of the system 10. The state is then investigated concerning if the object 24 is faulty or not, step 54, and if it is immediate repair or replacement is indicated, possibly together with an indication of a remaining life time of zero, step 56. If however the object 24 had any of the other states, step 54, the second life time estimating unit 42 performs a performance based anomaly life time estimation where it considers the performance of the object 24 in relation to the performance of the related objects 12 and 14, step 58, and the first life time estimating unit 40 performs a wear life time estimation, step 60, and provides the results to the life time selecting unit 46. The wear life time estimation may in its simplest form be based on counting the number of times the object 24 is being operated and relating this to the time interval during which it has been operated. The life time selecting unit 46 then combines the different life times, which in this embodiment is performed through comparing them, step 62, and then determines an estimated remaining life time of the object based on the combination, which in this embodiment is done through selecting one of the life times as an estimated life time of the object 24 based on the comparison, step 64. If the performance of the object 24 is normal as compared with the performances of the related objects 12 and 14, the anomaly life time estimation will give a value that is of no interest and then the wear life time value is selected. Otherwise these are compared with each other, and the lowest value may be selected. If the object 24 has an abnormal behaviour, the anomaly life time estimation is normally more correct and then this value is selected. Thereafter the selected life time is indicated, step 66. From what has been described above there is no remaining life time associated with a faulty object and then there is no point in performing remaining life time estimations.

In this way it is possible to estimate a more correct remaining life time of an object and thus better plan when to repair or replace the object. This simplifies the decisions process for the process management to decide when to perform service in relation to the object, which may be of interest when several objects are considered. The above-mentioned life time determination process may therefore with advantage be used for several objects in a system and be used as input when planning maintenance of the system. The maintenance plan of the object may thus because of these determinations be improved and the risk of sudden failure reduced.

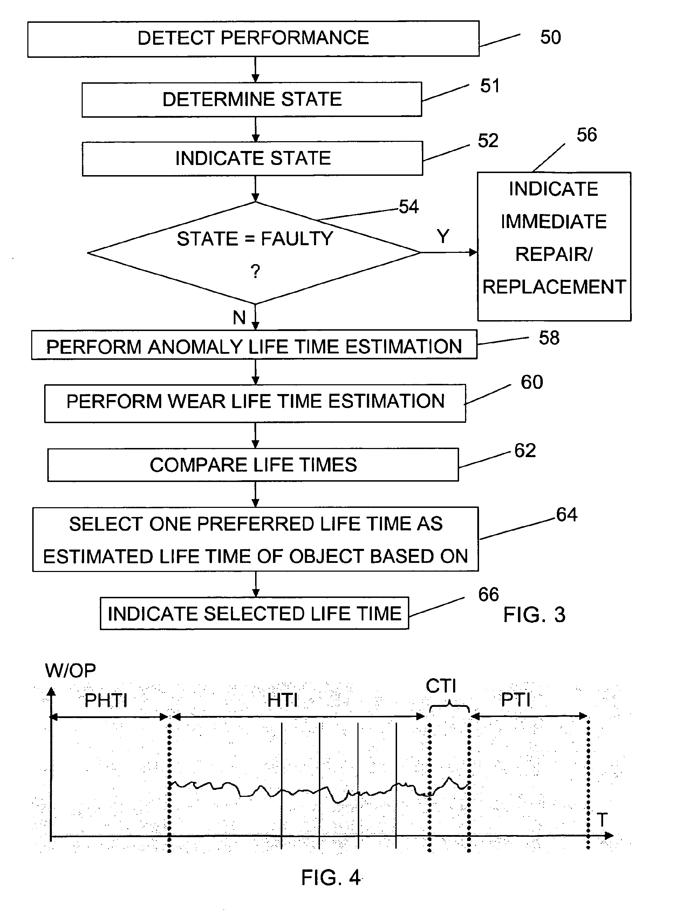

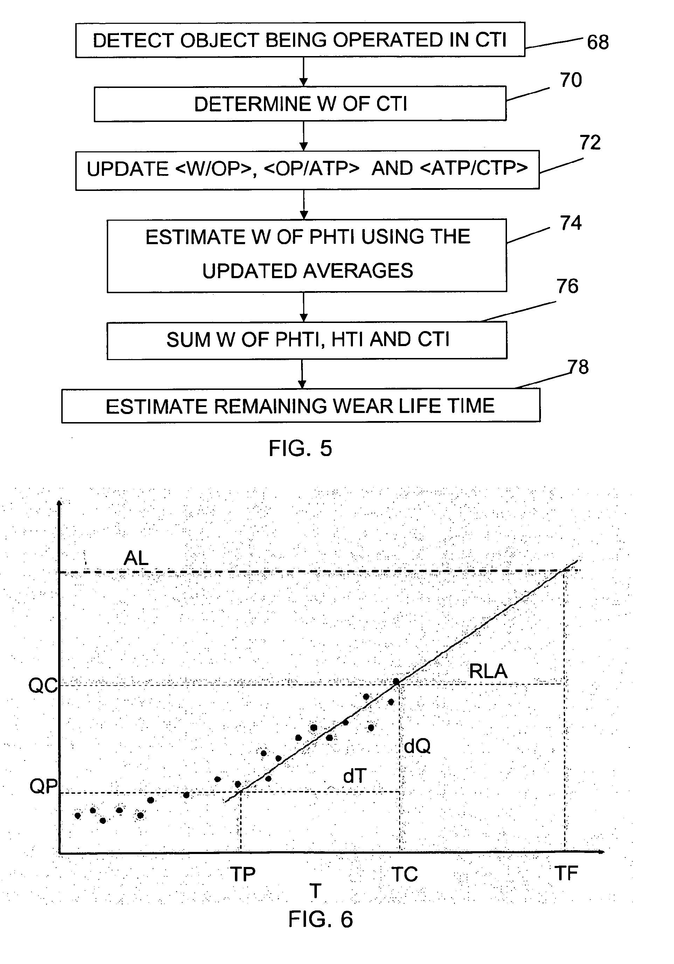

An efficient way to estimate the first type of remaining life time, i.e. the wear life time, performed in the first life time estimating unit 40 will now be described in relation to fig. 4 and 5, where fig. 4 shows a diagram showing different wear intervals used for performing a remaining wear life time estimation and fig. 5 shows a flow chart outlining a number of method steps taken when performing a remaining wear life time estimation.

An object may be subject to different types of influences. A ball bearing might for instance be influenced by different types of load depending on what kind of product is being produced.

Fig. 4 shows a chart of the amount of wear per operation W/OP for an object over time T. Here there is a pre-historic time interval PHTI in which the object has been operated before the device of the present invention has been put to use, a historic time interval HTI in which a number of different operations of the object have been made and the wear has been determined, a current time interval CTI in which the wear is currently being determined and a prediction time interval PTI for which the wear is to be estimated in order to perform the first type of remaining wear life time estimatation.

According to the invention the wear behaviour of the historic time interval HTI and current time interval CTI are considered and applied to both the pre-historic time interval PHTI and the prediction time interval PTI in order to provide a more accurate wear life time estimation.

The wear of the current time interval CTI is typically based on a wear factor per operation. Such wear factors per operation are then added to each other each time the object is being operated in the current time interval CTI in order to determine the wear W of the interval. The wear factor may here for instance be based on the $L_{10}$ life time calculation function described initially. This wear factor is typically based on statistical information provided for the object, but can vary because of the circumstances under which the object is operated or used. If for instance the object is a ball bearing, the wear of one operation or use is also dependent on such factors as a load applied on the bearing, for instance caused by a product being produced from a material. There may thus be wear factors of one level being added together to determine the wear during one type of operation or use and then wear factors of another level being added together during another type of operation or use.

It is furthermore possible that there is time when the object is not operated. It may thus be operated continuously for an active time period followed by an inactive time period. The current time interval CTI may thus be made up of an active time period and an inactive time period. Each such time interval including an active time period and an inactive time period is therefore a cycle. The current time interval CTI is in this example made up of the latest cycle, while the historic time interval HTI is made up all the previous known cycles.

The above mentioned information may therefore be used in an iterative way to determine a number of average values outlined the equations below:

$$<w/op\ (j)> = (<w/op\ (j-1)> * (n-1) + W(j)/N(j))/n \qquad (1)$$

$$<op/atp\ (j)> = (<op/atp\ (j-1)> * (n-1) + N(j)/atp(j))/ n \qquad (2)$$

$$<atp/ctp\ (j)> = (<atp/ctp\ (j+1)> * (n-1) + atp(j)/ctp(j))/n \qquad (3)$$

Here <w/op> is the average wear per operation or use of the object, W(j) is the wear of the current cycle, N the number of operations of this cycle, atp(j) the active time period of the current cycle, <op/atp> is the average number of operations per active time period, ctp the cycle time period, <atp/ctp> the average active time period per cycle time period, n the total number of cycles run through from the beginning of the historic time interval HTI and j the current cycle being processed.

As can be seen these averages are constantly and iteratively being updated for each new cycle of operation. The average <op/atp> is, as can be seen a time dependent average providing an average number of uses per time unit.

The wear Wpre of the prehistoric time period Tpre may then be calculated as:

$$Wpre = <w/op> * <op/atp> *< atp/ctp> * Tpre \qquad (4)$$

The total accumulated wear can then be estimated through summing the wear of the prehistoric time period, the historic time period and the current time period. From this accumulated wear it is then possible to estimate the remaining life time of the object using the averages for predicting the future wear. The time of failure is then typically the time when the sum of the accumulated wear and predicted future wear reach a pre-determined wear threshold. The remaining life time is then this failure time minus the time at the end of the current time interval.

Thus in order to estimate the remaining wear life time of the object the following steps are run through. The operation of the object is detected, step 68, by detector 28 and submitted to the first life time estimating unit 40. The first life time estimating unit 40 first determines the wear of the object in the current time interval, step 70, it then updates the averages <w/op>, <op/atp> and < atp/cti> in the way described above, step 72. Thereafter it estimates the wear Wpre of the prehistoric time interval PHTI using these updated averages, step 74. It thereafter sums the wear of the different time intervals PHTI, HTI and CTI, step 76, and finally estimates the remaining wear life time based on this sum and the above mentioned averages, step 78.

In this way it is possible to provide a wear life time estimation that improves as operation continues. It also takes account of the time when wear data is not provided. The improvement is also two-fold, since the estimation of both the pre-historic and future wear are improved simultaneously.

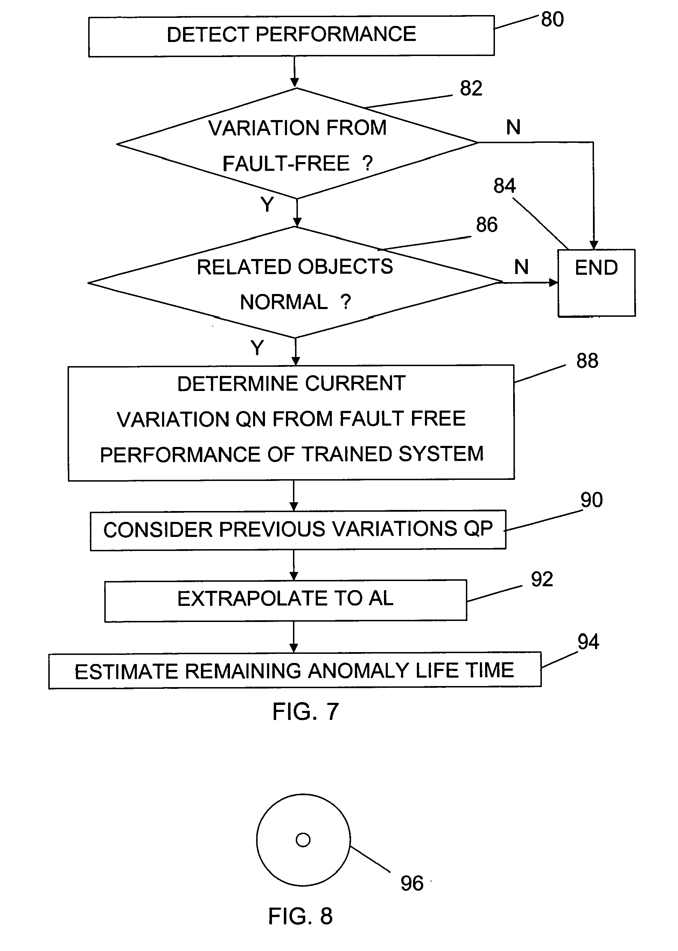

The functioning of the second life time estimating unit 42 will now be described in more detail with reference being made to fig. 2, 6 and 7, where fig. 6 shows a diagram showing a plotting in time and extrapolating of a linear variable reduction function associated with abnormal behaviour in order to perform a remaining anomaly life time estimation and fig. 7 shows a flow chart outlining a number of method steps taken when performing a remaining anomaly life time estimation.

The anomaly detection may be based on the principles of PCA (Principal Component Analysis) used for the object. In order to do this the system is trained on the normal fault-free behaviour, i.e. the nominal values of the detected performance value are identified.

When the system has been trained, it provides a variable reduction function, here in the form of a linear square predictive error function Q that is based on the deviations from the nominal performance values. This function Q is then used according to the invention for estimating the second type of remaining anomaly life time based on the performance of the object.

The method is started by the performance of object 24 being detected via the second detector 30, step 80. The performance data is then forwarded to the second lifetime estimating unit 42, which unit 42 may also receive performance data regarding the related objects 12 and 14 via detectors 34 and 36. The second life time estimating unit 42 then compares the current performance with previous known performances, which may be done through investigating if the data differs from the fault-free, step 82, and if it does not the method is ended, step 84. If it does, it may then investigate if the data of the related objects indicates a normal behaviour of the related objects, and if it does not the method is ended, step 84. If however, the related objects have a normal behaviour, step 86, the current variation QC from the fault free performance of the trained system is determined, by using the Q function, step 88.

Possible previous faulty performances indicated by previous variations in this function Q are then considered, step 90. In fig. 6 there is shown a current variation QC of the Q function at a current time TC that has been calculated and a previous variation QP of the Q function at a previous time TP that has previously been calculated. The previous variation is here considered through determining $dQ/dT$, which is then used for extrapolating the results of the Q function, step 92. The point in time where this extrapolated deviation crosses an alarm limit AL of the function Q is then determined to indicate the time of failure TF of the object. The alarm limit may here be provided as 2 or 3 times the 95% confidence limit $Q_{95}$ of the Q function. The remaining anomaly lifetime is then estimated to be the time of failure TF minus the current time TC, step 94.

In this way a second remaining life time is estimated and then considered. In this way it is possible to provide a more reliable remaining life time of the object as the degraded performance is also considered in addition to the wear. The remaining anomaly life time is a better life time estimate than the remaining wear life time estimate, when the performance of the object is degraded.

The performance may for a light bulb be estimated through measuring the resistance, temperature and spectra of the bulb. From this it is also clear that there may be more than one detector for this reason.

The device for determining the remaining life time of the object of the present invention was shown as being provided in a computer, which may be a server. The different units of the device may here be implemented through one or more processors together with computer program code for performing its functions. The first and second life time estimating units may also include memories for storing the various calculation results. The program code mentioned above may also be provided as a computer program product, for instance in the form of one or more data carriers carrying computer program code for performing the functionality of the present invention when being loaded into the computer. One such carrier 96, in the form of a CD ROM disc is generally outlined in fig. 8. It is however feasible with other data carriers. The computer program code can furthermore be provided as pure program code on an external server and downloaded to the computer in fig. 1.

There are several further variations that may be made to the present invention apart from those already mentioned. The wear life time estimation may be performed without determining a current use of the object in a current time interval. The estimated remaining life time was above determined through comparing the two types of estimated life times and selecting one as the remaining life time of the object. As an alternative it may be possible that they are combined, for instance through adding weighted life times to each other and selecting the sum as the estimated remaining life time. Instead of or in addition to considering the performance of related objects in the anomaly life time estimation it is possible to use several detectors detecting the same performance of the object and compare these detections with each other in order to evaluate the performance of the object. The wear life time may be calculated using other types of life time calculations than L10, for instance Proportional Hazards functions or Weibull Distribution as for instance described by D.R. Cox and D. Oakes in "Analysis of survival data", Chapman and Hall Ltd, London, 1984. The variable reduction function is not limited to being linear and may thus use a non-linear PCA function. It is furthermore not limited to PCA, but can also be based on Neural Networks or Singular Value Decomposition. The state detecting unit may for instance only detect two states healthy or faulty. Optionally the state detecting device may be omitted. The detectors that detect the performance of an object may be connected to both the second life time estimating unit and the fault determining unit. When estimating the remaining wear life time it is furthermore possible that no estimation is performed for a pre-historic time interval. The averages used need not be three averages. It is for instance possible to use the average wear of the object per use together with a time dependent average providing an average number of uses per time unit, where the time unit is not a cycle, but for instance second, minute, day or month. This may be of interest when the object is in continuous operation. In this case it is however harder to consider any inactive time periods when estimating wear. In the anomaly life time estimating unit it is possible to use another extrapolation than the linear extrapolation described. The extrapolation may for instance be exponential instead.

While the invention has been described in connection with what is presently considered to be most practical and preferred embodiments, it is to be understood that the invention is not to be limited to the disclosed embodiments, but on the contrary, is intended to cover various modifications and equivalent arrangements. Therefore the present invention is only to be limited by the following claims.

**Claims**

1. Method of determining the remaining life time of an object involved in a system (10) for process control or manufacturing, comprising the steps of:

   detecting (68) an object (24) being used,
   estimating (78) a first type of remaining life time for the object based on previous known uses of the object in a known historic time interval (HTI), detecting (80) the performance of the object via a first performance detector (30),
   comparing (82) the detected performance with known performances (88), evaluating (86) the performance of the object (24) based on the performance detected by the first performance detector (30) and a related performance detected by at least one further performance detector (34, 36),
   estimating (94) a second type of remaining life time for the object based on the evaluation and performance comparison,
   combining (62) the first and second types of remaining life times, and
   determining (64) a remaining life time of the object based on the combination.

2. Method according to claim 1, wherein the step of combining (62) comprises comparing the first and second types of remaining life times and the step of determining (64) comprises selecting one of the estimated remaining life times as the remaining life time of the object based on the comparison.

3. Method according to claim 1 or 2, wherein the evaluation (86) of the performance is based on the performance detected by the first performance detector (30) and the related performance of at least one related object (12, 14) of the system detected by said at least one further performance detector (34, 36).

4. Method according to any previous claim, wherein the evaluation (86) of the performance is based on the performance detected by the first performance detector (30) and the related performance detected for the same object (24) by at least one further performance detector.

5. Method according to any previous claim, wherein the step of comparing (82) comprises comparing the detected performance with a known fault-free performance and possible previous faulty performances (88).

6. Method according to claim 5, wherein the step of comparing the detected performance with the known fault-free performance is carried out using a variable reduction function (Q) based on variations from fault-free behaviour.

7. Method according to claim 6, wherein the second type of remaining life time is estimated based on extrapolating (92) the result of the function and the second type of remaining life time is estimated to be the time the extrapolated result of the function crosses an alarm limit (AL).

8. Method according any previous claim, wherein the step of estimating (78) the first type of remaining life time for the object is also based on a current use of the object in a current time interval (CTI).

9. Method according to claim 8, wherein the step of estimating a first type of remaining life time for the object comprises determining (70) a wear (W) of the object in the current time interval (CTI), adding (76) it to a wear determined for the historic time interval (HTI) and basing the estimation of the remaining life time on these determined wears and an estimated future wear.

**10.** Method according claim 9, wherein the step of estimating a first type of remaining life time for the object comprises updating (72) a set of average values (<w/op>, <op/apt>, <apt/ctp>) created for the historic time interval (HTI) with data determined for the current time interval (CTI), which set of average values include an average wear of the object per use (<w/op>), and a time dependent average (<op/apt>) providing an average number of uses per time unit, and using the updated averages for estimating the future wear when estimating the first remaining life time of the object.

**11.** Method according to claim 10, wherein the step of estimating a first type of remaining life time for the object comprises applying the updated averages on an earlier unknown pre-historic time interval (PHTI), estimating (74) a wear of the object during the pre-historic time interval and basing the estimating of the first type of remaining life time also on this estimated pre-historic wear.

**12.** Method according to any previous claim, further comprising the step of determining (51) the state of the object in a group of states based on a detected performance (50).

**13.** Method according to claim 12, wherein the group of states include the states faulty and functioning and further comprising the step of determining the actual remaining life time to be zero if the state is faulty.

**14.** Device (48) for determining the remaining life time of an object (24) involved in a system (10) for process control or manufacturing, comprising:

> a first life time estimating unit (40) configured to estimate a first type of remaining life time for an object (24) based on previous known uses of the object in a known historic time interval (HTI),
> a second life time estimating unit (42) configured to
> compare a detected performance of the object with known performances, evaluate the performance of the object (24) based on a performance of the object (24) detected by a first performance detector (30) and a related performance detected by at least one further performance detector (34, 36), and
> estimate a second type of remaining life time for the object based on the evaluation and performance comparison, and
> a life time selecting unit (46) configured to
> combine the first and second types of remaining life times, and
> determine a remaining life time of the object based on the combination.

**15.** Device according to claim 14, wherein the life time selecting unit (46) when being configured to combine the first and second types of remaining life times is configured to compare the first and second types of remaining lifetimes and when being configured to determine a remaining lifetime is configured to select one of the estimated remaining life times as the remaining life time of the object based on the comparison.

**16.** Device according to claim 14 or 15, wherein the evaluation of the performance is based on the performance detected by the first performance detector (30) and the related performance of at least one related object (12, 14) of the system detected by said at least one further performance detector (34, 36).

**17.** Device according to any of claims 14 - 16, wherein the evaluation (86) of the performance is based on the performance detected by the first performance detector (30) and the related performance detected for the same object (24) by at least one further performance detector.

**18.** Device according to any of claims 14-17, wherein the second life time estimating unit (42) when being configured to compare the detected performance of the object with known performances is configured to compare the detected performance with a known fault-free performance and possible previous faulty performances.

**19.** Device according to claim 18, wherein the second life time estimating unit (42) when configured to compare the detected performance with the known fault-free performance is configured to use a variable reduction function (Q) based on variations from fault-free behaviour.

**20.** Device according to claim 19, wherein the second life time estimating unit (42) when configured to estimate the second type of remaining life time is configured to base this estimation on extrapolating the result of the function and the second type of remaining life time is estimated to be the time the extrapolated result of the function crosses an alarm limit (AL).

21. Device according any of claims 14 - 20, wherein the first life time estimating unit (40) is configured to base the estimation of the first type of remaining life also on a current use of the object in a current time interval (CTI).

22. Device according to claim 21, wherein the first life time estimating unit (40) when being configured to estimate a first type of remaining life time for the object is configured to determine a wear (W) of the object in the current time interval (CTI), add it to a wear determined for the historic time interval (HTI) and base the estimation of the remaining life time on these determined wears and an estimated future wear.

23. Device according to claim 22, wherein the first life time estimating unit (40) when being configured to estimate a first type of remaining life time for the object is configured to update a set of average values (<w/op>, <op/apt>, <apt/ctp>) created for the historic time interval (HTI) with data determined for the current time interval (CTI), which set of average values include an average wear of the object per use (<w/op>), and a time dependent average (<op/apt>) providing an average number of uses per time unit, and using the updated averages for estimating the future wear when estimating the first remaining life time of the object.

24. Device according to claim 23, wherein the first life time estimating unit when being configured to estimate a first type of remaining life time for the object is configured to apply the updated averages on an earlier unknown pre-historic time interval (PHTI), estimate a wear of the object during the pre-historic time interval and base the estimating of the first type of remaining life time also on this estimated pre-historic wear.

25. Device according to any of claims 14 - 24, further comprising a fault determining unit (44) configured to determine a state of the object in a group of states based on a detected performance.

26. Device according to claim 25, wherein the group of states include the states faulty and functioning and the life time estimating unit (46) is further configured to determine the actual remaining life time to be zero if the state is faulty.

27. Device according to any of claims 14-26, further comprising at least one first detector (28) connected to the object (24) for detecting the object being used, at least one second detector (30) connected to the object for detecting the performance of the object and at least one third detector (34, 36) detecting the performance of at least one other object (12, 14) related to the object (24).

28. System (10) for process control or manufacturing comprising:

at least one object (12, 14, 16, 18, 20, 22, 24) being used in the system, and
a device (48) according to any of claims 16-30 for determining the remaining life time of this object.

29. Computer program product (96) for determining the remaining life time of an object (24) involved in a system (10) for process control or manufacturing, comprising computer program code to make a computer perform when said code is loaded into said computer:

detect an object (24) being used,
estimate a first type of remaining life time for the object based on previous known uses of the object during a known historic time interval (HTI),
detect the performance of the object via a first performance detector (30), compare the detected performance with known performances,
evaluate the performance of the object (24) based on the performance detected by the first performance detector (30) and a related performance detected by at least one further performance detector (34, 36),
estimate a second type of remaining life time for the object based on the evaluation and performance comparison,
combine the first and second types of remaining life times, and
determine a remaining life time of the object based on the combination.

EP 1 895 452 A1

FIG. 1

FIG. 2

11

FIG. 3

FIG. 4

DETECT OBJECT BEING OPERATED IN CTI ⟶ 68

↓

DETERMINE W OF CTI ⟶ 70

↓

UPDATE <W/OP>, <OP/ATP> AND <ATP/CTP> ⟶ 72

↓

ESTIMATE W OF PHTI USING THE UPDATED AVERAGES ⟶ 74

↓

SUM W OF PHTI, HTI AND CTI ⟶ 76

↓

ESTIMATE REMAINING WEAR LIFE TIME ⟶ 78

FIG. 5

FIG. 6

```
                                                    ┌─ 80
┌─────────────────────────────────────┐
│        DETECT PERFORMANCE           │
└─────────────────────────────────────┘
                    │
                    ▼                  ┌─ 82
              ╱─────────────╲              N
         ╱─ VARIATION FROM ─╲ ──────────────┐
         ╲   FAULT-FREE  ?  ╱               │
              ╲─────────────╱               │
                    │ Y                      │
                    ▼          ┌─ 84        │
              ╱─────────────╲   86           ▼
         ╱─ RELATED OBJECTS ─╲   N      ┌────────┐
         ╲    NORMAL  ?      ╱ ────────→│  END   │
              ╲─────────────╱          └────────┘
                    │ Y
                    ▼                          ┌─ 88
┌─────────────────────────────────────┐
│       DETERMINE CURRENT              │
│   VARIATION QN FROM FAULT FREE       │
│   PERFORMANCE OF TRAINED SYSTEM      │
└─────────────────────────────────────┘
                    │
                    ▼                          ┌─ 90
┌─────────────────────────────────────┐
│   CONSIDER PREVIOUS VARIATIONS QP    │
└─────────────────────────────────────┘
                    │
                    ▼                          ┌─ 92
┌─────────────────────────────────────┐
│         EXTRAPOLATE TO AL            │
└─────────────────────────────────────┘
                    │
                    ▼                          ┌─ 94
┌─────────────────────────────────────┐
│  ESTIMATE REMAINING ANOMALY LIFE TIME│
└─────────────────────────────────────┘
```

FIG. 7

FIG. 8

**European Patent Office**

**DECLARATION**

which under Rule 45 of the European Patent Convention
shall be considered, for the purposes of subsequent
proceedings, as the European search report

Application Number

EP 06 01 7228

| The Search Division considers that the present application, does not comply with the provisions of the EPC to such an extent that it is not possible to carry out a meaningful search into the state of the art on the basis of all claims | CLASSIFICATION OF THE APPLICATION (IPC) |
|---|---|
| Reason: | INV.<br>G06Q10/00 |

A meaningful search is not possible on the basis of all claims because all claims are directed to - Mathematical method - Article 52 (2)(a) EPC and formulated to merely specify commonplace features relating to a technological implementation of such matter to such an extent that a meaningful search is not possible. The examiner could not determine any technical solution defined in response to a technical problem within the content/scope of the application as filed. Any problem herein addressed do not appear to require a technical, but rather oriented in the implementation/calculcation of modelling values dealing with performance and remaining life time in the field of enterprise process/quality control (modelling of performance of an object using mathematical or statistical models).Whilst the implementation of such a subject-matter may include the use of generic technical features like method steps of comparing, determining and evaluating values, these plainly serve their well defined known functions of automating any modelling scheme as would be recognised by the skilful in the relevant technical field.

The applicant's attention is drawn to the fact that a search may be carried out during examination following a declaration of no search under Rule 45 EPC, should the problems which led to the declaration being issued be overcome (see EPC Guideline C-VI, 8.5).

-----

| Place of search | Date | Examiner |
|---|---|---|
| The Hague | 14 December 2006 | Thiam, Mansour |

EPO FORM 1504 (P04C37)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. BENGTSSON ; E. OLSSON ; P. FUNK ; M. JACKSON.** Technical Design of Condition Based Maintenance System. *Maintenance and Reliability Conference, Proceedings of the 8th Congress,* May 2004
- SKF spherical roller bearings - setting a new standard for performance and reliability. *Publ No. 5100,* December 2004, www. SKF.com/files/001577.pdf
- **LOECHER M ; DARKEN C.** Concurrent estimation of time-to-failure and effective wear. *Proceedings of the Maintenance and Reliability Conference (MARCON,* 2003, www.nps.navy.mil/cs/cjdarken/MARCON03.pdf
- **I.T: JOLIFFE.** Principal Component Analysis. Springer Series in Statistics
- **S. WOLD ; K. ESBENSEN ; P. GELADI.** *Principal Component Analysis, Chemometrics and Intelligent Laboratory Systems,* 1987, vol. 2, 37-52
- **D.R. COX ; D. OAKES.** Analysis of survival data. Chapman and Hall Ltd, 1984